## Europäisches Patentamt

## European Patent Office

## Office européen des brevets

(11) Publication number: **0 155 816**
**B1**

(12) **EUROPEAN PATENT SPECIFICATION**

(45) Date of publication of patent specification: **25.07.90**

(21) Application number: **85301742.4**

(22) Date of filing: **13.03.85**

(51) Int. Cl.⁵: **B 41 J 2/28**

(54) **Dot printer head.**

(30) Priority: **15.03.84 JP 50046/84**

(43) Date of publication of application:
**25.09.85 Bulletin 85/39**

(45) Publication of the grant of the patent:
**25.07.90 Bulletin 90/30**

(84) Designated Contracting States:
**DE FR GB**

(56) References cited:
**DE-A-3 202 976**
**US-A-3 896 918**
**US-A-4 049 107**

(73) Proprietor: **TOKYO ELECTRIC CO., LTD.**
**6-13, 2-chome, Nakameguro**
**Meguro-ku Tokyo (JP)**

(72) Inventor: **Kuniaki, Ochiai**
**4-36-5 Tokura**
**Mishima Shizuoka (JP)**
Inventor: **Horii, Masami**
**212-4 Shimofunabara Amagi-Yugashima**
**Tagata Shizuoka (JP)**
Inventor: **Komakine, Shigeo**
**80-2 Mifuku Ohhito**
**Tagata Shizuoka (JP)**
Inventor: **Tsuyuki, Shinzi**
**367 Kamizawa Kannami**
**Tagata Shizuoka (JP)**

(74) Representative: **Evans, David Charles et al**
**F.J. CLEVELAND & COMPANY 40-43, Chancery Lane**
**London, WC2A 1JQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a printer head for a matrix printer which print head comprises a plurality of needles defining a matrix whereby selective needles are driven to print combinations of dots defining a particular character, letter or figure.

The invention is particularly concerned with the construction and drive mechanism for the needle printing each dot.

Dot matrix printers are generally well known and comprise a plurality of cores disposed in a generally annular array, each core being surrounded by a coil. A yoke is connected magnetically to each of the cores and an armature is associated with each of said cores and has a portion thereof in juxtaposition to the core and a needle operatively connected to one end of the armature.

Each armature is adapted to rock about a pivot to move the needle generally longitudinally from a non-print position to a print position under the influence of the magnetic field induced in the core. The printing operation is generally of a ballistic nature, that is to say, the printing is effected by impact and/or driving engagement between the needle end impacting on a print ribbon which produces a dot marking on a piece of paper carried by a platen in juxtaposition thereto.

A typical example of such a construction is described and claimed in United States Patent Specification No. 4,230,412 which discloses a wire matrix print head assembly having a plurality of circumferentially spaced armature members in which each armature member is operatively associated with a pair of radially spaced magnetic pole members and a coil associated therewith, each member being mounted between the pole members and the wire printing members with the end surfaces of the pole members facing the direction of movement of the armatures during the printing movement from a non-print position to a print position, the inner pole member end surface providing a pivotal support surface for the armature member and also providing a locating surface engageable with a portion of the armature housing opposite thereto, a resilient biasing member mounted on the armature housing portion and engaging the armature member opposite the pivotal support surface, a resilient support and locating member engaging the radially innermost end portion of the armature opposite the associated wire printing member, and an axially adjustable sleeve means for supporting and locating the resilient support and locating member.

The printing force of such an arrangement is a function of the magnetic force which can be applied to the end of the armature on the one hand and ratio of the relative rocking length of the core to the pivot and pivot to the needle drive assembly on the other.

It will be appreciated by the man skilled in the art that in the rest position of the armature it is desirable that the gap between the armature surface and the central core should be as small as possible to minimise the magnetic losses applied in the air gap between the armature on the one hand and the central core on the other.

United States Patent Specification 4 230 412 discloses the use of a compression spring acting on the extremity of an armature in order to return the armature and needle to a non print position. This arrangement suffers from the disadvantage that torque exerted by the spring is at a maximum which has to be overcome by the applied magnetic force of the coil/core acting on the armature, thus reducing the effective printing force applied to the needle.

According to the present invention, there is provided a print head for a matrix printer, comprising a plurality of reciprocatable needles,

a core surrounded by a coil associated with each needle,

a yoke connected magnetically to each core,

an armature associated with each core, and operatively connected with said needle,

pivot means about which said armature rocks to move said needle between a non print and a print position,

and first spring means biasing said armature and needle operatively connected thereto to a non print position, characterised in that

second spring means is provided to act to oppose partly the biasing force of said first spring means and to urge said armature towards said yoke with a torque lower than the torque exerted by said first spring means.

Stop means may be provided to support the armature and to define a predetermined gap between said armature and said core in the non-print position. In one embodiment of the invention the pivot means may be provided on or by said yoke.

The first spring means may be a compression spring acting on the armature between the pivot means and the operative connection with said needle.

The second spring means may be a compression spring acting on the armature of a point between said pivot means and said core.

In another aspect of the invention said first and/or said second spring means serve to urge said armature towards said yoke.

A construction in accordance with the present invention, has the advantage that the torque exerted by the second spring can be increased to increase the positiveness of location of the armature to reduce the tendency thereof to the reducing abrasion of the fulcrum. Furthermore, the characteristics of the second spring are not influenced by a change of temperature so that fluctuations in the load on the armature are eliminated, thus ensuring more uniform printing. This in turn results in moderation of accuracy of parts and reduction of production costs.

From the foregoing, therefore, it will be appreciated floating the armature during operation is substantially prevented accompanied by a reduction of abrasion of the pivot at which an armature is supported is prevented. Furthermore, fluctuations of load on the armature can be reduced.

Following is a description by way of example only and with reference to the accompanying drawings of methods of carrying the invention into effect.

In the drawings:—

Figure 1 is a horizontal sectional view showing a conventional dot printer head;

Figure 2 is a horizontal sectional view illustrating an embodiment of the present invention; and

Figure 3 is a partial horizontal sectional view illustrating actions of a return spring and a holding spring.

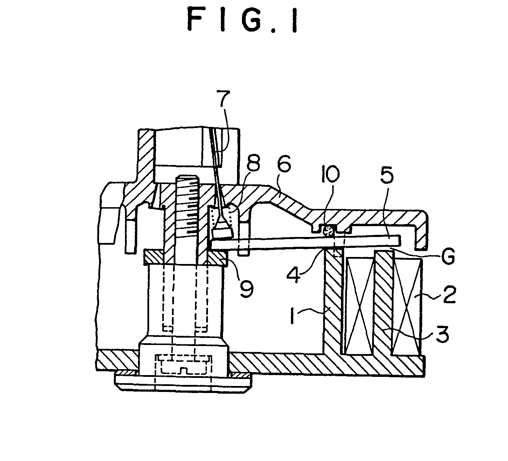

Conventionally, there are two types of dot printer heads which employ a hinge type magnet. In one of the two types, a fulcrum for an armature is located outside of a core, while in the other type, a fulcrum for an armature is located inside of a core. The latter has an advantage that it has a lower moment of inertia comparing with the former so that it is well adapted for high speed printing and consumes a lower power and besides it can be reduced in configuration. A typical one (see Japanese Patent Application No. 55—50016 or US—A—4 230 412) of such conventional arrangements wherein a fulcrum for an armature is located inside of a core is illustrated in Figure 1. Referring to Figure 1, a plurality of cores 3 which each hold a coil 2 are located outside of a common yoke 1, and armatures 5 are supported at fulcra 4 provided by an edge of an inner circumference of the yoke 1. Needles 7 are held by a common guide holder 6 and are each urged in a respective return direction together with an armature 5 by a needle spring 8 to a position in which the armature 5 is abutted with a common stop 9 to thus define a gap G between the armature 5 and the core 3. A common fulcrum holder 10 made of rubber for holding down the armatures 5 is provided on the guide holder 6.

Accordingly, a coil 2 may be energized to attract the associated armature 5 to the associated core 3 to effect printing, and then the associated needle 7 and armature 5 will be returned to the associated needle spring 8. When the armature 5 is returned to its initial position, the fulcrum holder 10 prevents an outer portion of the armature 5 from floating the yoke 1 about an abutting portion of the armature 5 with the stop 9. However, since there appear variations or fluctuations in a gap in which the fulcrum holder 10 and the armatures 5 are received, that is, in the distance between the yoke 1 and the guide holder 6, resulting in variations or fluctuations in resiliency of the fulcrum holder 10, forces of the fulcrum holder 10 which holds the armatures 5 cannot be constant. If the forces of the fulcrum holder 10 are too low, when the armatures 5 return, they will float from the yoke 1 and will thus repeat collisions with the yoke 1 so that much time will be taken until they come into stabilized or stationary conditions and the fulcra 4 will become worn. On the contrary, if the forces of the fulcrum holder 10 are too high, loads against printing operations of the armatures 5 are increased to reduce printing forces. It is not easy to make uniform the distance between the yoke 1 and the guide holder 6. Particularly in case of the fulcrum holder 10 where it is made of a rubber material, it is difficult to make its resiliency uniform, and besides as the temperature changes, its resiliency will vary so that when the temperature is low, loads to the armatures 5 will increase and hence only low printing results can be obtained until the temperature rises.

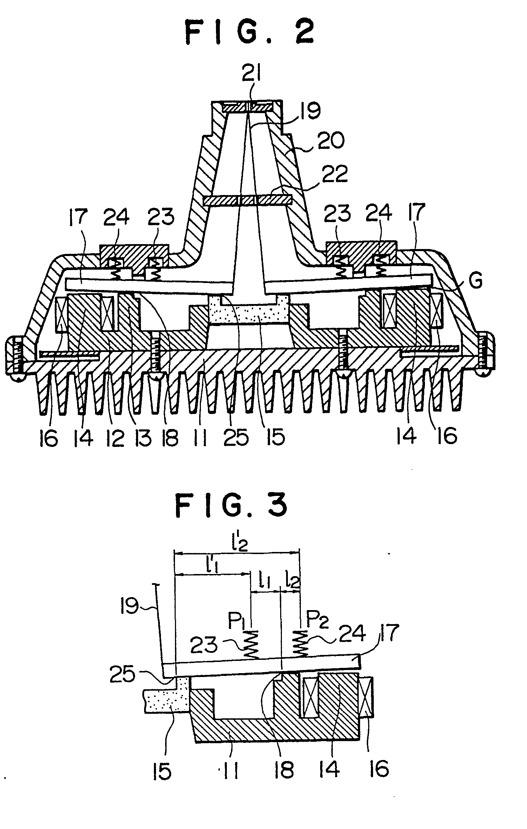

Turning now to the present invention illustrated in Figures 2 and 3 of the accompanying drawings, an annular bank 13 and a plurality of cores 14 are formed on a yoke 12 which is screwed to an inner face of a heat radiating cover 11. A stopper 15 is secured internally of the yoke 12, and a coil 16 is mounted on each of the cores 14. A plurality of armatures 17 are held for pivotal motion about fulcra 18 which are provided by the bank 13 contacted by the armatures 17. A needle 19 is secured to an inner end of each of the armatures 17 and extends for sliding motion through needle guides 21 and 22 both secured to a guide frame 20. A first return spring 23 and a second holding spring 24 for urging each of the armatures 17 toward the yoke 12 are held by the guide frame 20. A force P1 of the return spring 23 acts on a point of the armature 17 spaced inwardly from its fulcrum 18 by a distance $l_1$ and spaced by a distance $l_1$, from the stopper 15. Meanwhile, a force P2 of the holding spring 24 acts on a point of the armature 17 spaced by a distance $l_2$ from the fulcrum 18 toward the core 14 and spaced by a distance $l_2$, from the stopper 15. The torque P1 $l_1$ by the return spring 23 is greater than the torque P2 $l_2$ by the holding down spring 24.

In the dot printer head of such a construction as described above, if a coil 16 is energised, then the associated armature 17 is attacted to the associated core 14 and pivoted about its fulcrum 18 to cause the associated needle 19 to move into abutment with a platen to effect printing. Then, directly after the coil 16 is energized, the armature 17 is returned by a torque corresponding to a differece between P1 $l_1$ and P2 $l_2$ to its initial position in which it is abutted with the stopper 15 with a gap G left between the armature 17 and the core 14. Although at an instant of such returning a moment acts upon the armature so as to float the armature 17 from the yoke 12 about an abutting point 25 between the armature and the stopper 15, a moment equal to P1 $l_1'$+P2 $l_2'$ acts upon the armature 17 against the former moment, and hence the armature 17 is rapidly stabilized without floating from the yoke 12.

Particularly since the armature 17 can be attracted to the core 14 by a small magnetic force even if P2 $l_2$ is increased only if the condition P1 $l_1$>P2 $l_2$ is met, the moment P2 $l_2'$ to hold the armature 17 to the yoke 12 can be increased with the long distance $l_2'$, and accordingly positiveness of the action to hold floating of the armature 17 from the yoke 12 can be increased. As a result, the fulcrum 18 is not worn by collisions and can endure a long term of use. Besides, characteristics of the springs 23 and 24 which may be made of a steel material are not influenced by a change of temperature, and if a spring constant is made low, the characteristics of the springs 23 and 24 are not influenced by variations in distance between the yoke 12 and the guide frame 20. Accordingly, operation of the armatures 17 can be stabilized so that uniform print density can be attained, and accuracy of dimensions of parts can be moderated to facilitate production of the same and to reduce their production costs. It is to be noted that the return spring 23 may be replaced by a spring for returning the needle 19.

Since the present invention has such a construction as described above, a force of a holding spring acts on a point of an armature far more remote than a fulcrum from a stopper which is positioned to abut with an inner end of the armature to define a return position of the armature so that floating of the armature from the fulcrum upon returning to its return position can be prevented very effectively. Particularly under a condition that the force of the holding spring is lower than a returning torque of the armature, it can be increased together with a force of a return spring thereby to increase the positiveness of the action to prevent floating of the armature. Accordingly, abrasion of fulcra due to impact can be prevented. Moreover, since characteristics of the holding springs cannot be influenced by a change of temperature, variations or fluctuations of loads to the armatures can be eliminated, and hence printing of uniform density can be attained. In addition, characteristics of the holding springs which can have large deflections are not influenced very much by accuracy in dimension of other parts, and accordingly, the present invention has an additional effect that production of a dot printer head can be facilitated, resulting in reduction of a production cost.

## Claims

1. A print head for a matrix printer, comprising a plurality of reciprocatable needles (19), a core (14) surrounded by a coil (16) associated with each needle (19), a yoke (12) connected magnetically to each core (14), an armature (17) associated with each core (14), and operatively connected with said needle (19), pivot means (13, 18) about which said armature (17) rocks to move said needle (19) between a non print and a print position, and first spring means (23) biasing said armature (17) and needle (19) operatively connected thereto to a non print position, characterised in that second spring means (24) is provided to act to oppose partly the biasing force of said first spring means (23) and to urge said armature towards said yoke (12) with a torque lower than the torque exerted by said first spring means (23).

2. A print head as claimed in claim 1 further characterised by the provision of stop means (15) adapted to support said armature (17) to define a predetermined gap (G) between said armature (17) and said core (14) in the non print position.

3. A print head as claimed in claim 1 or claim 2 characterised in that the pivot means (18) is provided on or by said yoke (12).

4. A print head as claimed in any preceding claim characterised in that said first spring means (23) is a compression spring acting on the armature (17) between the pivot means (18) and the operative connection with said needle (19).

5. A print head as claimed in any preceding claim characterised in that said second spring means (24) is a compression spring acting on the armature (17) at a point between said pivot means (18) and said core (14).

6. A print head as claimed in any preceding claim characterised in that said first and/or said second spring means (23, 24) serve to urge said armature (17) towards said yoke (12).

## Patentansprüche

1. Druckkopf für einen Matrixdrucker, enthaltend mehrere hin- und herverschiebbare Nadeln (19),
einer von einer Spule (16) umgebenden Kern (14), der jeder Nadel (19) zugeordnet ist,
ein Joch (12), das magnetisch mit jedem Kern (14) verbunden ist,
einer Anker (17), der jedem Kern (14) zugeordnet ist und der wirkungsmäßig mit der Nadel (19) verbunden ist,
eine Schwenkeinrichtung (13), um die der Anker (17) schwenkt, um die Nadel (19) zwischen einer nichtdruckenden und einer druckenden Position zu bewegen, und
eine erste Federeinrichtung (23), die den Anker (17) und die wirkungsmäßig damit verbundene Nadel (19) in eine nichtdruckende Stellung vorspannt, dadurch gekennzeichnet, daß
eine zweite Federeinrichtung (24) dazu vorgesehen ist, der Vorspannkraft der ersten Federeinrichtung (23) teilweise entgegenzuwirken, um den Anker gegen das Joch (12) mit einem Drehmoment zu drücken, das niedriger ist als das Drehmoment, das von der ersten Federeinrichtung (23) aufgebracht wird.

2. Druckkopf nach Anspruch 1, weiterhin dadurch gekennzeichnet, daß eine Anschlageinrichtung (15) vorgesehen ist, die dazu eingerichtet ist, den Anker (17) abzustützen, um einen vorbestimmten Spalt zwischen dem Anker (17) und dem Kern (14) in der nichtdruckenden Position zu definieren.

3. Druckkopf nach Anspruch 1 oder 2, dadurch gekennzeichnet, daß die Schwenkeinrichtung (18) an dem Joch (12) vorgesehen oder von diesem gebildet ist.

4. Druckkopf nach einem der vorhergehenden Ansprüche, dadurch gekennzeichnet, daß die erste Federeinrichtung (23) eine Druckfeder ist, die auf den Anker (17) zwischen der Schwenkeinrichtung (18) und der wirkungsmäßigen Verbindung mit der Nadel (19) einwirkt.

5. Druckkopf nach einem der vorhergehenden Ansprüche, dadurch gekennzeichnet, daß die zweite Federeinrichtung (24) eine Druckfeder ist, die auf den Anker (17) an einem Punkt zwischen der Schwenkeinrichtung (18) und dem Kern (14) einwirkt.

6. Druckkopf nach einem der vorhergehenden Ansprüche, dadurch gekennzeichnet, daß die erste und/oder die zweite Federeinrichtung (23, 24) dazu dienen, den Anker (17) gegen das Joch (12) zu drücken.

**Revendications**

1. Une tête d'impression pour une imprimante matricielle, comprenant plusieurs aiguilles animées d'un mouvement alternatif (19),
    un noyau (12) entouré par un enroulement (16) associé à chaque aiguille,
    une carcasse (12) mécaniquement reliée à chaque noyau (14),
    une armature associée à chaque noyau (14) est fonctionnellement connectée avec ladite aiguille (19),
    un moyen de pivot (13) autour duquel ladite armature (14) oscille pour déplacer ladite aiguille entre une position de non-impression et une position d'impression,
    un premier moyen de ressort (23) sollicitant ladite armature (17) et ladite aiguille (19) qui lui sont fonctionnellement connectées vers une position de non-impression, caractérisée en ce que

un second moyen de ressort (24) est installé pour agir en s'opposant partiellement à la force de sollicitation dudit premier moyen de ressort (23) et pour solliciter ladite armature vers ladite carcasse (11) avec un couple inférieur au couple exercé par ledit premier moyen de ressort (23).

2. Un tête d'impression comme revendiquée à la revendication 1 caractérisée encore par l'installation d'un moyen d'arrêt (15) adapté à supporter ladite armature (17) en définissant un écartement prédéterminé entre ladite armature (17) et ledit noyau (14) dans la position de non-impression.

3. Une tête d'impression comme revendiquée à la revendication 1 ou la revendication 2 caractérisée en ce que le moyen de pivot (18) est prévu sur ou par ladite carcasse (11).

4. Une tête d'impression comme revendiquée dans l'une quelconque des revendications précédentes caractérisée en ce que ledit premier moyen de ressort (23) est un ressort de compression agissant sur l'armature (17) entre le moyen de pivot (13) et la liaison fonctionnelle avec ladite aiguille (19).

5. Une tête d'impression comme revendiquée dans l'une quelconque des revendications précédentes caractérisée en ce que ledit second moyen de ressort (24) est un ressort de compression agissant sur l'armature (17) en un point situé entre ledit moyen de pivot (13) et ledit noyau (14).

6. Une tête d'impression comme revendiquée dans l'une quelconque des revendications précédentes caractérisée en ce que ledit premier et/ou ledit second moyen de ressort (23, 24) ont pour fonction de solliciter ladite armature en direction de ladite carcasse.

# FIG. 1

# F I G. 2

# F I G. 3